Europäisches Patentamt

European Patent Office

Office européen des brevets

(11) Veröffentlichungsnummer: **0 441 356 A2**

# EUROPÄISCHE PATENTANMELDUNG

(21) Anmeldenummer: 91101624.4

(22) Anmeldetag: 06.02.91

(51) Int. Cl.5: **B09B 3/00**

(30) Priorität: 07.02.90 DE 4003693

(43) Veröffentlichungstag der Anmeldung:
14.08.91 Patentblatt 91/33

(84) Benannte Vertragsstaaten:
AT CH DE LI NL

(71) Anmelder: **Linde Aktiengesellschaft**
**Abraham-Lincoln-Strasse 21**
**W-6200 Wiesbaden(DE)**

(72) Erfinder: **Matt, Konrad, Dr.**
**Leonrodstrasse 12**
**W-8000 München(DE)**

(74) Vertreter: **Schaefer, Gerhard, Dr.**
**Linde Aktiengesellschaft Zentrale**
**Patentabteilung**
**W-8023 Höllriegelskreuth(DE)**

(54) Verfahren und Vorrichtung zur Bodensanierung.

(57) Die Erfindung betrifft ein Verfahren und eine Vorrichtung zur On-Site- oder Off-Site-Bodensanierung auf mikrobiologischem Weg, wobei zur Korrektur des pH-Wertes der Bodenfeuchtigkeit vorgeschlagen wird, das Bodenmaterial mit Kalkstein und/oder Dolomit in Kontakt zu bringen. Hierzu werden dem Bodenmaterial zweckmäßigerweise gemahlener oder gekörnter Kalkstein und/oder Dolomit zugemischt. Weitere Ausführungsformen sehen vor, Schichten 6, 7 aus Kalkstein und/oder Dolomit in die Schüttung 1 einzubauen.

EP 0 441 356 A2

# VERFAHRENEN UND VORRICHTUNG ZUR BODENSANIERUNG

Die Erfindung betrifft ein Verfahren zur Sanierung kontaminierten Bodenmaterials, bei dem das kontaminierte Bodenmaterial ausgehoben, aufgeschüttet und biologisch behandelt wird, sowie eine Vorrichtung zur Durchführung des Verfahrens.

Zur Sanierung von kontaminiertem Bodenmaterial wurden inzwischen verschiedene Techniken entwickelt, die auf eine Vernichtung, Abtrennung oder Umwandlung der kontaminierenden Stoffe abzielen. Bei den sogenannten On-Site-Verfahren wird das kontaminierte Bodenmaterial ausgehoben und direkt vor Ort behandelt. Wird das Bodenmaterial in einer entfernten stationären Behandlungsanlage dekontaminiert, so spricht man von einem Off-Site-Verfahren. Die Dekontamination des Bodenmaterials erfolgt vielfach mit Hilfe von Mikroorganismen, die in der Lage sind, die kontaminierenden Stoffe abzubauen. Das ausgehobene Bodenmaterial wird hierzu aufgeschüttet und gegebenenfalls mit für den Abbau der Schadstoffe geeigneten Mikroorganismen versetzt. Die Mikroorganismen werden über entsprechende Begasungseinrichtungen mit Sauerstoff versorgt. Auf diese Weise entsteht eine sogenannte Regenerationsmiete. Das dekontaminierte Bodenmaterial wird schließlich wieder abgelagert.

Bei allen aeroben biologischen Abbauvorgängen ist bei intensiver Prozeßführung, d.h. hohen Abbauraten mit einer Ansäuerung des Prozeßmediums, in der Regel der beteiligten Wasserphase, durch $CO_2$ oder metabolisch gebildete organische Säuren zur rechnen.

Im Fall von kontaminierten Standorten können zudem bereits acidische Substanzen als Bestandteil der Kontamination in zum Teil erheblichen Mengen anwesend sein. Einige Beispiele sind unter anderem Phenole oder Carbonsäuren, aber auch anorganische Begleitstoffe, wie nichtflüchtige Mineralsäuren, Hydrogensulfate, Eisen-III-Salze oder Zink-II-Chlorid.

Allen diesen Substanzen gemeinsam ist, daß bei ihrer Präsenz der für aerobe biologische Prozesse günstige pH-Bereich von mindestens 6,5 bis 9,5 in der für den Abbau essentiellen Bodenfeuchtigkeit oft deutlich unterschritten wird. Außerdem können bei niedrigen pH-Werten aus den komplexen Schadstoffmatrizes kontaminierter Standorte aus an sich immobilen und ungiftigen Verbindungen lösliche und hochtoxische Produkte entstehen. Ein herausragendes Beispiel ist die Freisetzung von Cyaniden aus z.B. Berliner Blau (Eisen(III)-Hexacyanoferrat(II)) oder Turnbulls Blau (Eisen(II)-hexacyaoferrat(III))- oder von Schwermetallen aus deren meist schwerlöslichen Hydroxiden bei pH-Senkung. Diese Problematik ist vor allem bei Sanierungen im Bereich ehemaliger Gaswerke und Kokereien zu beachten.

Bekanntermaßen versucht man daher, einer pH-Absenkung durch Dosierung alkalischer wäßriger Lösungen zu begegnen. Dabei besteht jedoch die Gefahr einer Überdosierung unter globaler oder punktueller extremer pH-Anhebung, die zu erheblicher Schädigung der auf enge pH-Bereiche fixierten Mikrobiologie im betroffenen Bereich führt.

Der Erfindung liegt die Aufgabe zugrunde, ein Verfahren der eingangs genannten Art so auszugestalten, daß ein pH-Wert von 6,5 bis 9,5 in der Bodenfeuchtigkeit eingehalten wird und die genannten Nachteile bekannter Verfahren nicht auftreten.

Diese Aufgabe wird erfindungsgemäß dadurch gelöst, daß das Bodenmaterial mit Kalkstein und/oder Dolomit in Kontakt gebracht wird.

Dolomit besteht aus Calciumcarbonat, das in wechselnden Mengen mit Magnesiumcarbonat und Magnesiumoxid in der Natur vergesellschaftet ist. Aufgrund von chemischen Reaktionen zwischen dem Kalkstein bzw. Dolomit und den im Bodenmaterial vorhandenen acidischen Komponenten wird eine Absenkung des pH-Wertes der Bodenfeuchtigkeit zuverlässig verhindert.

Das im Kalkstein bzw. Dolomit enthaltene Calciumcarbonat reagiert mit $CO_2$ unter Bildung relativ leicht wasserlöslichen Calciumhydrogencarbonats nach folgender Gleichung.

$$CaCO_3 + CO_2 + H_2O => Ca(HCO_3)_2.$$

Mit anderen Säuren reagiert Calciumcarbonat nach folgender Gleichung:

$$CaCO_3 + 2\,H => Ca^{2+} + CO_2 + H_2O.$$

Calciumcarbonat selbst ist in Wasser schwer löslich, stellt jedoch als natürliches Bodenmaterial ebenso wie Calciumhydrogencarbonat auch keinen den Boden gefährdenden Schadstoff dar. Nicht verbrauchter Dolomit oder Kalkstein kann somit nach Durchführung der Sanierung im Bodenmaterial verbleiben und erhöht sogar noch dessen Verdichtbarkeit.

Da die Neutralisationswirkung nur beim Zusammentreffen mit Säuren wirksam wird, tritt bei einer Neutralisation mittels Calciumcarbonat auch keine schädliche pH-Anhebung auf. Ein Dosieren von zusätzlichen Chemikalien in den Wasserkreislauf ist nicht nötig.

Gemäß einer bevorzugten Ausführungsform der Erfindung werden gemahlener oder gekörnter Kalkstein und/oder Dolomit dem Bodenmaterial vor der Aufschüttung zugemischt. Dies ist durch Zugabe während einer in der Regel ohnehin erforderlichen Homogenisierung bzw. Untermischung von Mikroben und Trägersubstanz unschwierig zu bewerkstelligen. Kalkstein und/oder Dolomit sind dabei nach erfolgter Zugabe homogen im Bodenmaterial verteilt.

Zusätzlich oder alternativ dazu ist vorgesehen, bei der Aufschüttung des Bodenmaterials mindestens eine Zwischenschicht aus Kalkstein und/oder Dolomit in die Schüttung einzubringen. Gemäß einer weiteren Ausführungsform wird vorgeschlagen, das aufgeschüttete Bodenmaterial mit einer Schicht aus Kalkstein und/oder Dolomit zu überdecken. Eine andere Ausführungsform sieht vor, das Bodenmaterial auf eine Drainageschicht aus Kalkstein und/oder Dolomit aufzuschütten.

Beim Betrieb von Regenerationsmieten entsteht üblicherweise Sickerwasser, das unterhalb des aufgeschütteten Bodenmaterials gesammelt, abgezogen und auf die Oberfläche der Schüttung aufgesprüht wird. Mit der vorliegenden Erfindung wird das anfallende Sickerwasser bei der Rezirkulation über die Schüttung durch Auflösung entsprechender Mengen von Dolomit und/oder Kalkstein neutralisiert.

Da die Zugabe des Calciumcarbonats als Feststoff erfolgen muß, ist das Verhältnis der einzelnen Korngrößen von kontaminiertem Material und Calciumcarbonatzuschlag von hoher Bedeutung. Das mittlere Korngrößenverhältnis sollte dabei von ca. 1 : 1 bei verhältnismäßig schwer abbaubaren Substanzen bis ca. 1 : 10 bei verhältnismäßig leicht abbaubaren Substanzen reichen, da bei letzteren eine größere aktive Oberfläche zur Lösung des Calciumcarbonats von Vorteil ist.

Eine Vorrichtung zur on-site- oder off-site-Sanierung kontaminierten Bodenmaterials besteht nach dem Stand der Technik aus einer Schüttung aus kontaminiertem Bodenmaterial, die zum Abbau der kontaminierenden Stoffe geeignete Mikroorganismen enthält. Erfindungsgemäß steht die Schüttung mit Kalkstein und/oder Dolomit in Kontakt.

Bevorzugterweise ist die Schüttung aus einer homogenen Mischung aus kontaminiertem Bodenmaterial und gemahlenem Kalkstein und/oder Dolomit aufgebaut. Gemäß einer weiteren vorteilhaften Ausführungsform ist innerhalb der Schüttung mindestens eine Zwichenschicht aus Kalkstein und/oder Dolomit angeordnet. Eine andere Ausführungsform sieht vor, daß über der Schüttung eine Deckschicht aus Kalkstein und/oder Dolomit angeordnet ist. Gemäß einer Weiterbildung des Erfindungsgedankens wird vorgeschlagen, daß unter der Schüttung eine Drainageschicht aus Kalkstein und/oder Dolomit angebracht ist.

Grundsätzlich ist die Erfindung auf alle Bodensanierungsverfahren anwendbar, bei denen kontaminiertes Bodenmaterial nach dessen Auskofferung oberirdisch On-Site-bzw. Off-Site- mikrobiologisch behandelt wird.

Die Erfindung bietet vielfache Vorteile: Da die Neutralisationswirkung des Kalksteins bzw. Dolomits nur beim Zusammentreffen mit den Säuren wirksam wird, tritt keine schädliche pH-Anhebung auf. Es besteht keine Gefahr der Überdosierung, wie sie bei der herkömmlichen Verwendung alskalischer wäßriger Lösungen auftritt. Außerdem wird das in der Regenerationsmiete anfallende Sickerwasser kontinuierlich neutralisiert. Darüber hinaus kommt das erfindungsgemäße Verfahren völlig ohne eine Steuerung bzw. Regelung aus. Als erwünschter Nebeneffekt wird ferner die Verdichtbarkeit des behandelten Bodens erhöht.

Im folgenden soll die Erfindung anhand von Ausführungsbeispielen, die in den Zeichnungen schematisch dargestellt sind, näher erläutert werden.

Es zeigen:

Figur 1     eine Regenerationsmiete mit homogener Mischung aus Bodenmaterial, Dolomit und Kalkstein,

Figur 2     eine Regenerationsmiete mit Zwischenschichten aus Dolomit,

Figur 3     eine Regenerationsmiete mit einer Deckschicht aus Dolomit.

In allen dargestellten Fällen wurde vor der eigentlichen Behandlung das kontaminierte Bodenmaterial, z.B. ölverseuchtes Erdreich, ausgebaggert und zu einer Regenerationsmiete aufgeschüttet. Zur biologischen Behandlung des Bodenmaterials wird über in den Figuren nichtdargestellte Begasungsschläuche Sauerstoff in die Schüttung eingetragen, um den mikrobiellen Abbau der Schadstoffe anzuregen. Gegebenenfalls werden speziell gezüchtete Mikroorganismen, die auf den Abbau bestimmter Schadstoffe spezialisiert sind, in die Schüttung eingebracht.

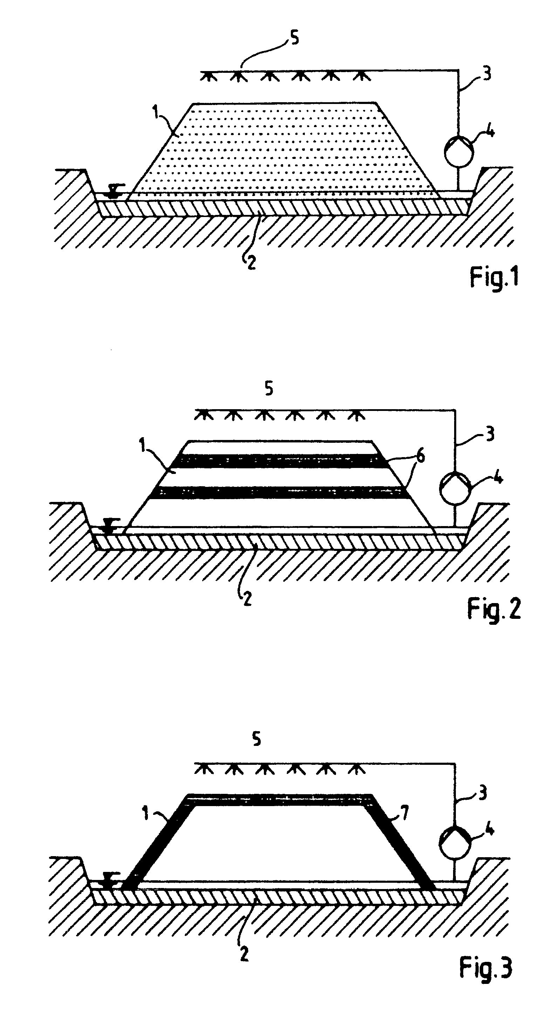

Bei der in Figur 1 dargestellten Anordnung wurde vor der Aufschüttung des Bodenmaterials das Bodenmaterial mit gemahlenem Dolomit und Kalkstein vermischt. Die Zugabe dieser Materialien erfolgte während der ohnehin erforderlichen Homogenisierung des Bodenmaterials. Es entsteht so ein homogenes Gemisch 1 aus Bodenmaterial, Dolomit und Kalkstein, das über einer festen und wasserundurchlässigen Unterlage, der sogenannten Mietenbasis 2, aufgeschüttet ist. In der Schüttung 1 anfallendes Sickerwasser wird oberhalb der Mietenbasis 2 gesammelt und über Leitung 3 und Pumpe 4 abgezogen. Das Sickerwasser wird mittels einer Sprühanlage 5 über der Schüttung 1 verrieselt.

Figur 2 zeigt eine Regenerationsmiete, bei der in das aufgeschüttete Bodenmaterial 1 Zwischenschichten 6 aus Dolomit eingebaut wurden. Ansonsten entspricht diese Anordnung der in Figur 1 gezeigten.

Die in Figur 3 gezeigte Anordnung unterscheidet sich von der in Figur 2 dargestellten dadurch, daß die Schüttung 1 aus Bodenmaterial nicht von Zwischenschichten aus Dolomit durchsetzt ist, sondern von einer Deckschicht 7 aus Dolomit überdeckt wird.

Bei den in den Figuren 2 und 3 gezeigten Regenerationsmieten wird das anfallende Sickerwasser bei der Rezirkulation über die Regenerationsmiete durch Auflösung entsprechender Mengen von Dolomit aus den Schichten 6 bzw. 7 neutralisiert.

**Patentansprüche**

1. Verfahren zur Sanierung kontaminierten Bodenmaterials, bei dem das kontaminierte Bodenmaterial ausgehoben, aufgeschüttet und biologisch behandelt wird, dadurch gekennzeichnet, daß das Bodenmaterial mit Kalkstein und/oder Dolomit in Kontakt gebracht wird.

2. Verfahren nach Anspruch 1, dadurch gekennzeichnet, daß gemahlener oder gekörnter Kalkstein und/oder Dolomit dem Bodenmaterial vor der Aufschüttung zugemischt werden.

3. Verfahren nach Anspruch 1 oder 2, dadurch gekennzeichnet, daß bei der Aufschüttung des Bodenmaterials mindestens eine Zwischenschicht aus Kalkstein und/oder Dolomit in die Schüttung eingebracht wird.

4. Verfahren nach einem der Ansprüche 1 bis 3, dadurch gekennzeichnet, daß das aufgeschüttete Bodenmaterial mit einer Schicht aus Kalkstein und/oder Dolomit überdeckt wird.

5. Verfahren nach einem der Ansprüche 1 bis 4, dadurch gekennzeichnet daß das Bodenmaterial auf eine Drainageschicht aus Kalkstein und/oder Dolomit aufgeschüttet wird.

6. Verfahren nach einem der Ansprüche 1 bis 5, dadurch gekennzeichnet, daß ein Korngrößenverhältnis von kontaminiertem Bodenmaterial und Kalkstein und/oder Dolomit von ca.1 : 1 bis ca.1 : 10 eingestellt wird.

7. Vorrichtung zur Sanierung kontaminierten Bodenmaterials nach einem der Ansprüche 1 bis 6 mit einer Schüttung aus kontaminiertem Bodenmaterial, die zum Abbau der kontaminierenden Stoffe geeignete Mikroorganismen enthält, dadurch gekennzeichnet, daß die Schüttung (1) mit Kalkstein und/oder Dolomit in Kontakt steht.

8. Vorrichtung nach Anspruch 7, dadurch gekennzeichnet, daß die Schüttung (1) aus einer homogenen Mischung aus kontaminiertem Bodenmaterial und gemahlenem Kalkstein und/oder Dolomit aufgebaut ist.

9. Vorrichtung nach Anspruch 7 oder 8, dadurch gekennzeichnet, daß innerhalb der Schüttung (1) mindestens eine Zwischenschicht (6) aus Kalkstein und/oder Dolomit angeordnet ist.

10. Vorrichtung nach einem der Ansprüche 7 bis 9, dadurch gekennzeichnet, daß über der Schüttung (1) eine Deckschicht (7) aus Kalkstein und/oder Dolomit aneordnet ist.

11. Vorrichtung nach einem der Ansprüche 7 bis 10, dadurch gekennzeichnet, daß unter der Schüttung eine Drainageschicht aus Kalkstein und/oder Dolomit angeordnet ist.

Fig.1

Fig.2

Fig.3